# EUROPEAN PATENT SPECIFICATION

(11) **EP 4 483 277 B1**
(45) Date of publication and mention of the grant of the patent: **04.03.2026**
(21) Application number: 24708082.3
(22) Date of filing: 23.01.2024
(51) Int. Cl.: G06Q 30/0201, G06Q 30/0241, G06Q 50/00, H04N 21/2347, H04N 21/254, H04N 21/266, H04N 21/4627, G06F 21/10, G06F 21/62, G06Q 30/0251, H04L 9/40, H04N 21/235, H04N 21/6377

(54) **SECURE AND PRIVACY PRESERVING SERVER-TO-SERVER CONTENT DISTRIBUTION**
SICHERE UND DATENSCHUTZBEWAHRENDE SERVER-ZU-SERVER-INHALTSVERTEILUNG
DISTRIBUTION DE CONTENU DE SERVEUR À SERVEUR PRÉSERVANT LA SÉCURITÉ ET LA CONFIDENTIALITÉ

(30) Priority: 03.02.2023 US 202363443202 P
(43) Date of publication of application: 01.01.2025
(73) Proprietor: Google LLC, Mountain View, CA 94043 (US)
(72) Inventor: WANG, Gang, Mountain View, California 94043 (US); HULSE, Benjamin Scott, Mountain View, California 94043 (US); WHEELER, Anjali, Mountain View, California 94043 (US)
(74) Representative: Marks & Clerk GST
(86) International application number: PCT/US2024/012514
(87) International publication number: WO 2024/163213

(56) References cited:
- EP-B1- 2 625 820
- WO-A1-2016/044129
- WO-A1-2022/256080
- JP-A- 2012 118 878
- US-A1- 2009 315 670
- US-A1- 2018 218 168
- US-A1- 2019 098 344
- US-A1- 2020 160 388
- US-A1- 2021 281 409
- US-A1- 2022 078 514
- US-A1- 2022 278 828
- US-A1- 2022 405 407
- US-B2- 11 182 829
- US-B2- 8 108 895
- LEON J HELSLOOT ET AL: "BAdASS: Preserving Privacy in Behavioural Advertising with Applied Secret Sharing", vol. 20180815:132612, 14 August 2018 (2018-08-14), pages 1 - 23, XP061026074, Retrieved from the Internet <URL:http://eprint.iacr.org/2018/744.pdf> [retrieved on 20180814]

## Description

This application claims priority to U.S. Provisional Application No. 63/443,202, filed on February 3, 2023.

### TECHNICAL FIELD

This specification is related to data processing, data privacy and security, and cryptography.

### BACKGROUND

Data security and user privacy are vital in systems and devices connected to public networks, such as the Internet. The enhancement of user privacy has led many developers to change the ways in which user data is handled. For example, some browsers are planning to deprecate the use of third-party cookies.

US 2022/278828 A1 discloses an online privacy preserving method. The method includes receiving, by a first MPC server, a request for a selection criterion of at least one interest group to which a user of a client device belongs. The received request does not reveal an identifier of the client device to the first MPC server. In response to receiving the request, the first MPC server determines a set of ordered selection criterion of the at least one interest group retrieved from a cache of the first MPC server. The set of ordered selection criterion is transformed into a set of key/value pairs secured from being revealed by the second MPC server. The first MPC server transmits the set of key/value pairs to the second MPC server with data that enables the second MPC server to identify a key having a highest value. LEON J HELSLOOT ET AL: "BAdASS: Preserving Privacy in Behavioural Advertising with Applied Secret Sharing", vol. 20180815:132612, 14 August 2018 (2018-08-14), pages 1 - 23, Retrieved from the Internet URL:http://eprint.iacr.org/2018/744.pdf, discloses a privacy-preserving protocol for Online Behavioural Advertising without disclosing any information about user interests to any party. US 2009/315670 A1 describes a digital media playing system. US 2022/405407 A1 discloses a secure machine learning platform.

### SUMMARY

Aspects of the present invention provide for a computer-implemented method, a system, a computer-readable medium, and a computer program product, as set out by the appended set of claims. In general, one innovative aspect of the subject matter described in this specification can be embodied in methods including the operations of receiving, by a publisher server of a publisher and for a client device of a user, a content request that requests content of the publisher for presentation to the user, the content request comprising a set of data that includes encrypted user data; providing, by the publisher server, the set of data to a secure digital distribution system to cause the secure digital distribution system to (i) decrypt the encrypted user data to obtain cleartext user data and (ii) select candidate digital components based on the user data; receiving, by the publisher server and from the secure distribution system, candidate digital component data for each of one or more of the selected candidate digital components, wherein the candidate digital component data for each selected candidate digital component comprises (i) a selection parameter for use in a digital component selection process and (ii) encrypted digital component data that identifies said candidate digital component, wherein the encrypted digital component data for each selected candidate digital component comprises cleartext digital component data that is encrypted using a public encryption key and the publisher server is unable to decrypt said encrypted digital component data; selecting, by the publisher server, a given digital component for presentation to the user from a set of candidate digital components comprising (i) the one or more selected candidate digital components for which digital component data is received from the secure distribution system and (ii) candidate digital components of the publisher; and providing, to the client device, selected digital component data identifying the given digital component. Other implementations of this aspect include corresponding apparatus, systems, and computer programs, configured to perform the aspects of the methods, encoded on computer storage devices.

These and other implementations can each optionally include one or more of the following features. In some aspects, whenever the given digital component is a candidate digital component of the one or more selected candidate digital components for which digital component data is received from the secure distribution system, the selected digital component data includes the encrypted digital component data that identifies the candidate digital component. Whenever the given digital component is a candidate digital component of the candidate digital components of the publisher, the selected digital component data includes the given digital component or a reference to a network location from which the given digital component is stored for downloading to client devices.

**In** some aspects, the cleartext digital component data includes the digital component. The cleartext digital component data can include a web bundle that includes one or more resources for displaying the digital component.

The cleartext digital component data can include data identifying, as the given digital component, a video digital component. Providing the selected digital component data identifying the given digital component can include providing the selected digital component data to an application configured to request a playlist comprising the video digital component and video content of the publisher from one or more content delivery networks. The application can be configured to request the playlist from a secure content delivery network that is configured to obtain the video content of the publisher from an unverified content delivery network and to generate the playlist by stitching the video digital component with the video content of the publisher. The application can be configured to request the playlist from an unverified content delivery network that is configured to obtain the video digital component from a secure content delivery network and to generate the playlist by stitching the video digital component with the video content of the publisher.

**In** some aspects, the video digital component is encrypted using a digital rights management technique and an operating system of the client device is configured to decrypt the video digital component for display to the user.

**In** some aspects, the set of data includes contextual data describing an environment in which the one or more digital components will be presented.

Particular embodiments of the subject matter described in this specification can be implemented so as to realize one or more of the following advantages. To preserve user privacy when a publisher selects digital content, e.g., digital components, for distribution to a client device of a user, the publisher's servers ("publisher servers") can receive user data related to the user from the client device in encrypted form, provide the encrypted user data to a secure distribution system, and receive encrypted content from the secure distribution system along with a selection parameter for use in a selection process performed by the publisher servers to select the content that is provided to the client device. These encryption techniques and end-to-end encryption secure the data during transmission, prevent the publisher from accessing the user data, which can be sensitive, and prevent the publisher from gaining insight into the user based on the content provided to the user, which can indicate interests of the user, thereby enhancing user privacy relative to techniques that do not include this workflow and to techniques that use third-party cookies to identify user interests. Without accessing the actual content, the publisher servers can provide, to the client device, the encrypted content for display in a secure frame, e.g., a fenced frame, of an electronic resource that restricts the application presenting the content from communicating any data about the content from the client device, e.g., to the publisher servers or other parties. This end-to-end protection of user data and content presented to the users prevents publishers from tracking users or learning anything about the users, while still enabling the same user experience that would be provided using less secure means, such as using third-party cookies.

Differential privacy techniques, e.g., differential privacy noise, can also be applied to user data and/or to selection parameters to prevent the publisher servers from gaining insight into the user based on the selection parameters. Encrypting user data and encrypting digital content in combination with differential privacy techniques applied to selection parameters provide the synergistic effects of enabling publishers to provide relevant content that is of interest to users, which enhances the users' experiences, while ensuring that the publishers that provide the content are unable to access the user data or learn anything about the user for which the content is requested.

This also enables publishers to provide relevant content that is selected based on user data in the absence of third-party cookies that are being deprecated, which enhances data security and privacy as compared to the use of third-party cookies that enable user tracking across multiple domains or multiple publishers. The use of the secure workflows described in this document also reduces the bandwidth consumption and data storage associated with transmitting and storing third-party cookies since such cookies are no longer used to select content.

When providing video digital components to supplement primary video content of the publisher, the techniques described in this document also prevent the publisher from accessing information identifying the video digital components that are displayed to the user. As such, video digital components can be selected based on sensitive user information, data identifying the video, and/or its subject matter in ways that prevent publisher servers from being able to infer user interests. In the described techniques, a secure distribution system can provide encrypted data identifying the video digital component and non-encrypted data (e.g., selection parameter and/or duration) that can be used in the selection process to the publisher servers and the publisher servers can provide the encrypted data to another server for stitching with a primary video stream that includes the primary video content. In addition, the operating system of the client device can be leveraged to decrypt the video digital components for display to the user of the client device in a secure manner while also preventing the publisher servers from being able to obtain screenshots of the content of the video digital components. These techniques prevent the publisher servers from obtaining data identifying video digital components or their content, which prevents the publisher servers from inferring the sensitive user information of the user that is used to select the video digital components.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which digital components are distributed to client devices in a privacy preserving manner.
FIG. 2 is a block diagram of an example environment in which digital components are distributed to client devices in a privacy preserving manner.
FIG. 3 is a flow diagram of an example process for selecting and providing a digital component for display at a client device in a privacy preserving manner.
FIG. 4 is a block diagram of an example computer system.

Like reference numbers and designations in the various drawings indicate like elements.

### DETAILED DESCRIPTION

In general, this document describes systems and techniques for selecting and distributing digital components to client devices in ways that protect user privacy and confidential data of content platforms and/or digital component providers. A secure distribution system can be configured to perform digital component selection processes that use sensitive user data so that the user data is not provided to any other entity. The secure distribution system can host and execute selection logic of one or more content platforms when selecting digital components based on user data in manners that ensure that no other entity can access the selection logic of the content platform. In this way, both the data of the users and the data of the content platforms are kept secure.

The secure distribution system can execute the selection logic of each content platform in isolated environments that isolate the code from code of other content platforms. The isolated environments can be sandbox environments, e.g., in the form virtual machines, that control what information is provided to the isolated environments and what information is allowed to be sent from the isolated environments and where such information can be sent. This prevents content platforms from leaking sensitive user information from the secure distribution system.

The selection logic of a content platform can be configured to generate digital component selection data that is used by the secure distribution system to select a digital component from multiple digital components. The digital component selection data can include a selection parameter, e.g., an amount that the content platform is willing to provide to a publisher for the presentation of a digital component with an electronic resource of the publisher. The selection logic can be configured to generate the digital component selection data based on a user data received from, and maintained at, the client device of the user.

To present digital components that are selected and/or customized for users based on user data with their own electronic resources (e.g., web pages or application content of the publisher), publishers' digital component servers can interact with the secure distribution system to obtain digital components based on the user data. The client device of the user can encrypt the user data prior to sending the user data to a publisher so that the publisher's servers cannot access the user data in cleartext. Cleartext is text that is not computationally tagged, specially formatted, or written in code, or data, including binary files, in a form that can be viewed or used without requiring a key or other decryption device, or other decryption process. The selected digital component can be delivered for presentation at the client device in ways that prevent the publisher from being able to identify the digital component. This prevents the publisher from learning interests of users based on their activities at resources other than the publisher's own resources. For example, absent the described techniques, a publisher could learn user interests of a user from digital components that are selected based on the interests of the user.

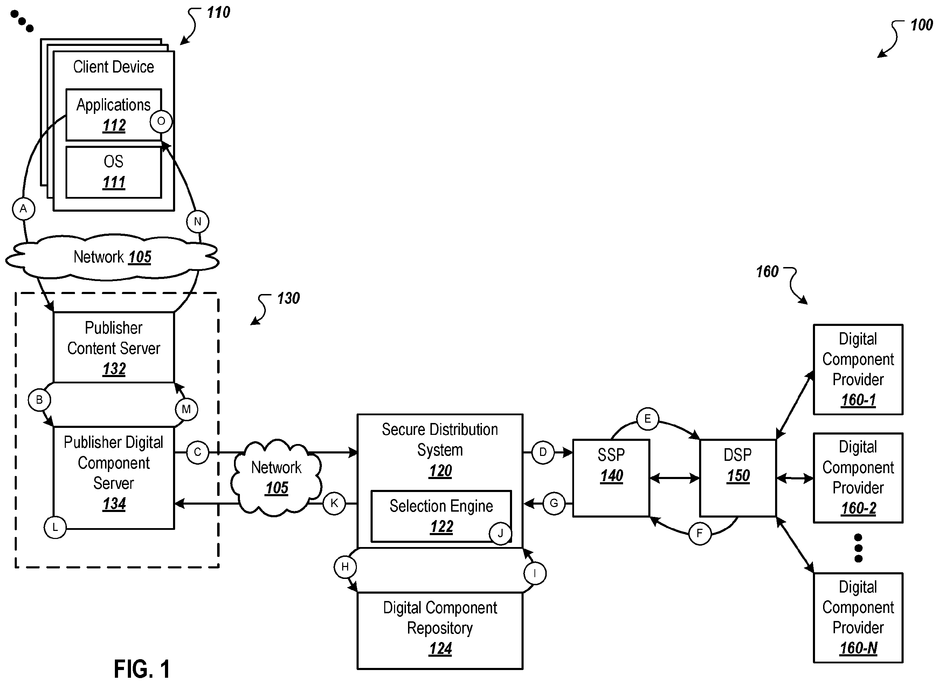

FIG. 1 is a block diagram of an example environment 100 in which digital components are distributed to client devices 110 in a privacy preserving manner. The environment 100 includes a data communication network 105, such as a local area network (LAN), a wide area network (WAN), the Internet, a mobile network, or a combination thereof. The data communication network 105 connects client devices 110 with a publisher system 130 and connects the publisher system 130 with a secure distribution system 120. Although not shown in FIG. 1, the network 105 can also connect the secure distribution system 120 with content platforms, such as supply side platforms (SSPs) 140 and/or demand side platforms (DSPs) 150. The network 105 can also connect the various content platforms to one another and/or to digital component providers 160, e.g., to servers of the digital component providers 160.

A client device 110 is an electronic device that is capable of communicating over the network 105. Example client devices 110 include personal computers, server computers, mobile communication devices, e.g., smart phones and/or tablet computers, and other devices that can send and receive data over the network 105. A client device can also include a digital assistant device that accepts audio input through a microphone and outputs audio output through speakers. The digital assistant can be placed into listen mode (e.g., ready to accept audio input) when the digital assistant detects a "hotword" or "hotphrase" that activates the microphone to accept audio input. The digital assistant device can also include a camera and/or display to capture images and visually present information. The digital assistant can be implemented in different forms of hardware devices including, a wearable device (e.g., watch or glasses), a smart phone, a speaker device, a tablet device, or another hardware device. A client device can also include a digital media device, e.g., a streaming device that plugs into a television or other display to stream videos to the television, a gaming device, or a virtual reality system.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

A client device 110 can include an operating system 111 and applications 112, such as web browsers and/or native applications, to facilitate the sending and receiving of data over the network 105. A native application is an application developed for a particular platform or a particular device (e.g., mobile devices having a particular operating system). Although operations may be described as being performed by the client device 110, such operations may be performed by an application 112 running on the client device 110. A client device 110 can include many different types of applications.

The applications 112 can present electronic resources, e.g., web pages, application pages, or other application content, to a user of the client device 110. The electronic resources can include digital component slots for presenting digital components with the content of the electronic resources. A digital component slot is an area of an electronic resource (e.g., web page or application page) for displaying a digital component. A digital component slot can also refer to a portion of an audio and/or video stream (which is another example of an electronic resource) for playing a digital component.

An electronic resource is also referred to herein as a resource for brevity. For the purposes of this document, a resource can refer to a web page, application page, application content presented by a native application, electronic document, audio stream, video stream, or other appropriate type of electronic resource with which a digital component can be presented.

As used throughout this document, the phrase "digital component" refers to a discrete unit of digital content or digital information (e.g., a video clip, audio clip, multimedia clip, image, text, or another unit of content). A digital component can electronically be stored in a physical memory device as a single file or in a collection of files, and digital components can take the form of video files, audio files, multimedia files, image files, or text files and include advertising information, such that an advertisement is a type of digital component. For example, the digital component may be content that is intended to supplement content of a web page or other resource presented by the application 112. More specifically, the digital component may include digital content that is relevant to the resource content (e.g., the digital component may relate to the same topic as the web page content, or to a related topic). The provision of digital components can thus supplement, and generally enhance, the web page or application content.

When the application 112 loads a resource that includes a digital component slot, the application 112 can generate a digital component request that requests a digital component for presentation in the digital component slot. In some implementations, the digital component slot and/or the resource can include code (e.g., scripts) that cause the application 112 to request a digital component.

When the application 112 loads a resource of a publisher, the application 112 can send the digital component request to a publisher system 130 of that publisher. For example, the publisher can embed a script or other code into a resource that causes the application 112 or client device 110 to generate and send the digital component request to the publisher system 130 of the publisher when the resource is loaded by the application 112 of client device 110.

A digital component request sent by a client device 110 can include sensitive user data related to a user of the client device 110 and/or non-sensitive data. The sensitive user data can include, for example, data identifying user groups that include the user as a member. The user groups can include interest-based groups. Each interest-based group can include a topic of interest and a set of members identified (e.g., determined or predicted) to be interested in the topic. The user groups can also include, for example, groups of users that performed particular actions at electronic resources (e.g., websites or native applications) of publishers. For example, a user group can include users that visited a website, users that requested more information about an item, interacted with (e.g., selected) a particular digital component and/or added an item to a virtual cart to potentially acquire the item. The user data for a user can also include user profile data and/or attributes of the user. As described in more detail below, the application 112 (or another component of the client device 110, such as an operating system) can encrypt user data prior to providing the user data to the publisher system 130 in a digital component request.

Unencrypted user data may not be accessible outside of the application 112 or other component that stores and encrypts the user data. For example, if the application 112 is a browser, the browser may not provide to, or allow any website, access to the user data in cleartext. In some implementations, the operating system or another secure component of the client device 110 can manage user data and only provide encrypted user data to applications 112, such as web browsers and native applications. In some implementations, the application 112 can include a component for requesting and presenting digital components. This component can be a secure component that has access to cleartext user data, but also securely protects the user data from being accessed in cleartext by websites, application content servers, etc.

Further to the descriptions throughout this document, a user may be provided with controls (e.g., user interface elements with which a user can interact) allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

A digital component request can also include contextual data, which is generally considered non-sensitive. The contextual data can describe the environment in which a selected digital component will be presented. The contextual data can include, for example, coarse location information indicating a general location of the client device 110 that sent the digital component request, a resource (e.g., website or native application) with which the selected digital component will be presented, a spoken language setting of the application 112 or client device 110, the number of digital component slots in which digital components will be presented with the resource, the types of digital component slots, and other appropriate contextual information.

The publisher system 130 includes a publisher content server 132 and a publisher digital component server 134. Each server can be implemented using one or more server computers (or other appropriate computing devices), that may be distributed across multiple locations.

The publisher content server 132 can receive requests for content, e.g., organic content of the publisher, and provide the requested content to the client device 110 that requests the content. For example, a publisher can be a video publisher or video sharing site that streams or otherwise provides videos for users to watch on their client devices 110. In this example, the publisher content server 132 can provide videos to client devices 110 in response to requests and/or can push videos to client devices 110.

In another example, a publisher can be a publisher of web pages, e.g., news web pages. In this example, the publisher can provide web page content when the user navigates to a domain of the publisher.

The publisher digital component server 134 can select and/or provide digital components for presentation with the content of the publisher. The publisher digital component server 134 can select a digital component from candidate digital components stored by the publisher digital component server 134 and/or candidate digital components received from the secure distribution system 120. For example, the publisher digital component server 134 can store a set of candidate digital components for presentation with its resources. In addition, the publisher digital component server 134 can request additional candidate digital components from the secure distribution system 120. For example, the publisher digital component server 134 can request candidate digital components that are selected based on user data from the secure distribution system 120 as the publisher digital component server 134 may not have access to such user data in cleartext.

The secure distribution system 120 can be implemented using one or more server computers (or other appropriate computing devices), that may be distributed across multiple locations. In general, the secure distribution system 120 receives requests for digital components from publisher systems 130, selects digital components based on data included in the requests, and sends the selected digital components to the client devices 110.

As the secure distribution system 120 receives sensitive user data, the secure distribution system 120 can be operated and maintained by an independent trusted party, e.g., a party that is different from the users of the client devices, the publishers, the parties that operate the SSPs 140 and DSPs 150, and the digital component providers 160. For example, the secure distribution system 120 can be operated by an industry group or a governmental group.

As described in more detail below, the secure distribution system 120 can select a digital component from a set of candidate digital components stored (or for which digital component data is stored) in a digital component repository 124 and/or a set of candidate digital components received from an SSP 140. The digital component repository 124 stores digital components received from content platforms (e.g., from SSPs 140 and/or DSPs 150) and additional data (e.g., metadata) for each digital component. The digital component repository 124 can be implemented using one or more databases or other appropriate data structures stored by a data storage device.

The metadata for a digital component can include, for example, distribution criteria that defines the situations in which the digital component is eligible to be provided to a client device 110 in response to a digital component request received from the client device 110 and/or a selection parameter that indicates an amount that will be provided to the publisher if the digital component is displayed with a resource of the publisher and/or interacted with by a user when presented. For example, the distribution criteria for a digital component can include location information indicating which geographic locations that digital component is eligible to be presented, user group membership data identifying user groups to which the digital component is eligible to be presented, resource data identifying resources with which the electronic resource is eligible to be presented, and/or other appropriate distribution criteria. The distribution criteria can also include negative criteria, e.g., criteria indicating situations in which the digital component is not eligible (e.g., with particular resources or in particular locations). Other data that can be used to select a digital component can also be stored in the digital component repository with a reference (e.g., a link or as metadata) to its digital component.

An SSP 140 is a technology platform implemented in hardware and/or software that automates the process of obtaining digital components for the resources. Publishers of resources can use an SSP 140 to manage the process of obtaining digital components for digital component slots of its resources. Each publisher can have a corresponding SSP 140 or multiple SSPs 140. Some publishers may use the same SSP 140.

A DSP 150 is a technology platform implemented in hardware and/or software that automates the process of distributing digital components for presentation with the resources and/or applications. A DSP 150 can interact with multiple supply-side platforms SSPs on behalf of digital component providers 160 to provide digital components for presentation with the resources of multiple different publishers. Digital component providers 160 can create (or otherwise publish) digital components that are presented in digital component slots of publisher's resources.

An example process for selecting and providing a digital component for presentation at a client device 110 is illustrated in stages A - N, which illustrate a flow of data between the components of the environment 100.

In stage A, the application 112 sends a request for content of a publisher to a publisher content server 132 of the publisher. For example, the content request can be for a web page of the publisher, a video hosted by the publisher, application content of a native application of the publisher, and so on. The application 112 can send the request in response to a request by the user, e.g., the user navigating to a domain of the publisher using a web browser or selecting content within an application or web page of the publisher.

To aid in the selection of one or more digital components for presentation with the requested content, the application 112 can send, with the content request, a set of data. The set of data can include encrypted user data, contextual data, and/or other appropriate data for use in selecting digital components. The application 112 can encrypt the user data to prevent the publisher system 130 from accessing the user data in cleartext. The application 112 can send the set of data in various ways, e.g., as an additional header such as an additional Hypertext Transfer Protocol (HTTP) header or as an HTTP request parameter.

As described above, the secure distribution system 120 can be configured and trusted to select digital components based on cleartext user data. The application 112 can encrypt the user data using an encryption key of the secure distribution system 120. The secure distribution system 120 can then decrypt the user data using a decryption key corresponding to the encryption key. For example, the application 112 can encrypt the user data using a public key and the secure distribution system 120 can decrypt the user data using a private key corresponding to (e.g., mathematically linked to) the public key.

In some implementations, multiple secure distribution systems 120 can be used to select digital components based on user data. For example, the online ecosystem can include multiple secure distribution systems operated by different entities. In such cases, the publisher system 130 can notify the application 112 of the secure distribution system 120 from which the publisher system 130 requests digital components based on user data. The application 112 can use this information to encrypt the user data using the appropriate encryption key of that secure distribution system 120. For example, the application 112 or client device 110 can store the encryption key for each of multiple secure distribution systems 120. In another example, the publisher system 130 can send the appropriate encryption key to the application, e.g., in response to receiving the content request.

In some implementations, the application 112 can encode the user data in a probabilistic data structure that the secure distribution system 120 is configured to query to obtain the user data. For example, the application 112 can encode user group identifiers for user groups that include the user as a member into a Bloom filter or cuckoo filter that the secure distribution system 120 can query to determine whether the user is a member of one or more user groups. The use of probabilistic data structures in place of or in addition to other encryption techniques described in this document (e.g., by encrypting the probabilistic data structure) can prevent publisher systems 130 from inferring the number of user groups that include the user as a member. For example, the user data includes, for each user group that includes the user as a member, an identifier for that user group without other data, a publisher system 130 may be able to infer the number of user groups based on the size of the encrypted data. The application 112 can prevent such inferences using probabilistic data structures as they have the same or similar data size independent of the number of user groups that include the user as a member. As the use of probabilistic data structures hide the data from entities that are not configured to query the data structures (e.g., that do not have the corresponding hash functions), this can be considered another way of encrypting the user data.

In another example, the application 112 can add padding in the form of extra data to the user data that is encrypted to mask the data size of the user data. For example, the application 112 can determine an amount of extra data for each content request such that the encrypted user data of each content request is constant. In another example, the application 112 can add padding randomly or pseudorandomly to mask the size of the actual user data that is being encrypted.

In stage B, publisher content server 132 generates and sends a digital component request to the publisher digital component server 134. The digital component request can include the set of data received from the application 112 and/or other data. For example, the digital component request can include the set of data and/or data indicating the content requested by the application 112.

In stage C, the publisher digital component server 134 generates and sends a digital component request to the secure distribution system 120. This digital component request can include the set of data, a portion of the set of data (e.g., less than all of the set of data, such as the encrypted user data or the contextual data), and/or the other data (e.g., data identifying the requested content).

In stage D, the secure distribution system 120 sends a context-based digital component request to an SSP 140. The context-based digital component request can include the contextual data of the digital component request received from the publisher digital component server 134. However, the context-based digital component request may not include any user data. The secure distribution system 120 can temporarily store the encrypted user data while waiting for a response from the SSP 140. To reduce latency, the secure distribution system 120 can decrypt the user data and/or query any probabilistic data structure included in the digital component request in parallel with the context-based digital component request. For example, the secure distribution system 120 can decrypt the user data using a decryption key (e.g., private key) corresponding to the encryption key (e.g., public key) used to encrypt the user data. For probabilistic data structures, the secure distribution system 120 can query the probabilistic data structure using hash functions for the probabilistic data structures. These hash functions can vary based on the type of the data structure, e.g., whether it is a Bloom filter, cuckoo filter, or other type of probabilistic data structure. The secure distribution system 120 can query the probabilistic data structure to identify the user groups that include the user as a member and/or other user data encoded in the probabilistic data structure.

In stage E, the SSP 140 forwards the context-based digital component request to one or more DSPs 150. In stage F, each DSP 150 sends, to the SSP 140, one or more selection parameters for one or more digital components, e.g., digital components stored in the digital component repository 124. For example, the DSP 150 can select a digital component based on the contextual data of the context-based request and determine a selection parameter for the digital component based on the contextual data. The DSP 150 can also provide a digital component and selection parameter, e.g., a digital component that is not stored in the digital component repository 124. Each DSP 150 can send a selection parameter with data indicating the digital component to which the selection parameter applies. The digital components for which selection parameters are provided by the DSPs 150 can be referred to as context-based candidate digital components.

In stage G, the SSP 140 sends the context-based candidate digital components, data identifying the context-based candidate digital components, and/or their corresponding selection values to the secure distribution system 120. In some implementations, the SSP 140 can filter context-based candidate digital components and/or selection parameters prior to sending the context-based candidate digital components and/or selection values to the secure distribution system 120. For example, the SSP 140 can filter context-based candidate digital components and/or selection parameters based on publisher controls specified by the publisher corresponding to the publisher system 130 that sent the digital component request. In a particular example, a publisher of a web page about a particular event may define, as a publisher control, that digital components related to another event may not be presented with this web page. The SSP 140 can filter based on rules or other data provided by the publisher.

In stage H, the secure distribution system 120 queries the digital component repository 124 for a set of user-based digital components that are selected based on the user data of the digital component request. For example, the secure distribution system 120 can submit a query that defines, as conditions of the query, the user data of the digital component request. In some implementations, the query can also include context-based conditions. For example, a query can request retrieval of digital components that include, as distribution criteria, a particular user group and/or a particular geographic location. Although shown after stages D - G, the secure distribution system 120 can query the digital component repository in parallel with these stages to reduce the latency in selecting and providing a digital component to the publisher digital component server 134.

In stage I, the secure distribution system 120 receives a set of user-based candidate digital components from the digital component repository 124 and a selection parameter for each user-based digital components. The set of user-based candidate digital components can include those having distribution criteria that matches the conditions of the query.

In stage J, a selection engine 122 of the secure distribution system 120 selects a digital component to provide to the application 112 for presentation in the digital component slot. The selection engine 122 can select a digital component from the set of context-based candidate digital components received from the SSP 140 and the user-based candidate digital components retrieved from the digital component repository 124.

In some implementations, the selection engine 122 can use a secure workflow that enables the use of custom selection logic of content platforms to generate digital component selection data (e.g., identification of selected candidate digital components and/or their selection parameters) for use in the selection process. The secure workflow can include multiple stages and at least some of the stages can be customized for each content platform. For example, the secure workflow can include a stage in which selection parameters are generated for candidate digital components based on the user data. As the user data and selection logic of content platforms are confidential data, the selection engine 122 can execute the selection logic in isolated execution environments.

In some implementations, the selection engine 122 can be configured to initiate an isolated execution environment for each content platform. An isolated execution environment can be in the form of a virtual machine or other sandbox environment for which the selection engine 122 can control the information provided to and sent from the isolated execution environment. A sandbox is an isolated environment provided by a computing system that enables applications to execute without impacting applications running outside the sandbox or the system on which the applications run. A sandbox provides a limited interface between code that executes in the sandbox and the system in which the sandbox runs, which allows the system to tightly control the impact code running in the sandbox can have on the larger system.

The selection engine 122 can receive digital component selection data from each isolated execution environment. The digital component selection data can include data identifying one or more candidate digital components of the content platform and, for each candidate digital component, a selection parameter. The selection engine 122 can select one or more candidate digital component(s) from the user-based candidate digital components and/or the context-based digital components based on the selection parameter for each digital component in the two sets. For example, the selection engine 122 can select the digital component(s) having the highest selection parameter(s) or the highest score(s) where the scores are based on a combination of the selection parameter and a predicted performance parameter (e.g., likelihood of user interaction or conversion).

In some implementations, the selection engine 122 identifies each user-based candidate digital component, each context-based digital component, and their respective selection parameters. Rather than selection from these, the selection engine 122 can provide data for all candidates that are eligible for selection to the publisher digital component server 134.

In stage K, the secure distribution system 120 sends candidate digital component data for each of one or more candidate digital components to the publisher digital component server 134. For example, the secure distribution system 120 can send candidate digital component data for each selected candidate digital component selected by the selection engine 122 or for each eligible digital component. The digital component data for each candidate digital component can include a selection parameter for use in a digital component selection process performed by the publisher digital component server 134 and/or encrypted digital component data that identifies the candidate digital component.

The encrypted digital component data can include the digital component or an identifier for the digital component. For example, if the digital component does not include a video or has a data size that is less than a threshold, the encrypted digital component data can include the digital component itself. In such examples, the secure distribution system 120 can package all data and/or files that are used to present the digital component into a data structure, e.g., into a web bundle. The secure distribution system 120 can then encrypt this data structure for each candidate digital component to prevent the publisher system 130 from identifying the digital component packaged in the data structure. For example, the secure distribution system 120 can encrypt, for each candidate digital component, digital component data that includes the data structure for the candidate digital component using an encryption key (e.g., public key) of application 112 or client device 110 for which the digital component request was sent by the publisher system 130 to the secure distribution system 120.

The client device 110 can send this encryption key with the content request and the publisher system 130 can include the encryption key with the digital component request sent to the secure distribution system 120. In this example, the encryption key may be digitally signed so that the secure distribution system 120 can validate the encryption key before using it to encrypt the digital component data. This enables the secure distribution system 120 to detect if the encryption key has been modified along the route to the secure distribution system 120, e.g., by the publisher system 130. In some implementations, the secure distribution system 120 can encrypt the digital component data for each digital component using a public key of the secure distribution system 120 or another publicly known key. In such cases, the secure distribution system 120 can provide access to the decryption key to a secure component (e.g., application or operating system) of the client device 110.

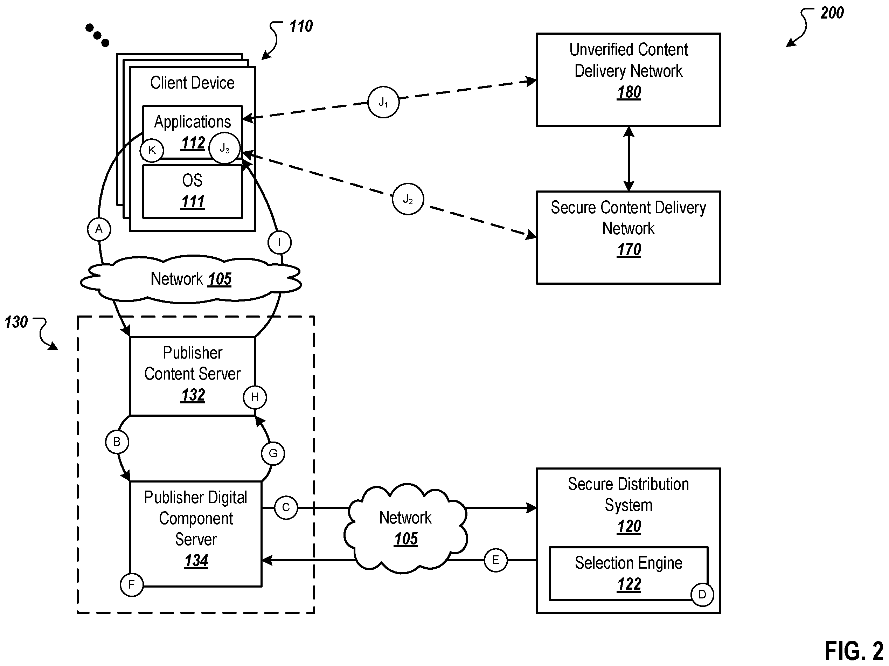

Encrypting the digital component data prevents the publisher system 130 from accessing the digital component data but enables the client device 110 to decrypt the digital component data to present the candidate digital component if that candidate digital component is selected by the publisher digital component server 134. If the digital component does include a video, the secure distribution system 120 can use the techniques described below with respect to FIG. 2 to send digital component data to the publisher digital component server 134.

In some implementations, the encryption and decryption key pair used to encrypt and decrypt the digital component data (e.g., web bundle) is a one-time use key pair for a single digital component selection process. This can prevent the publisher system 130 and secure distribution system 120 from learning information about the user over multiple digital component requests based on the encryption key provided to the secure distribution system 120. The application 112 can be configured to provide a new encryption key each time the application 112 sends a content request to the publisher system 130.

The secure distribution system 120 can provide the selection parameter to the publisher digital component server 134 in cleartext for use in the selection process. However, in some cases, the value of the selection parameter may reveal or enable the inference of sensitive user data. For example, if a content platform or digital component provider uses a constant selection parameter for users that are members of a user group owner by the content platform or digital component provider, a selection parameter having that constant value can indicate that the user is a member of that user group. One or more of the following techniques can be used to prevent such inferences of user data.

In some implementations, the secure distribution system 120 is configured to apply differential privacy techniques to adjust the selection parameters prior to sending the selection parameters to the publisher digital component server 134. For example, the secure distribution system 120 can increase or decrease selection parameters using the differential privacy techniques.

In some implementations, the application 112 can inject noise into the user data. For example, the application 112 can add, to a list of user groups that include the user as a member, one or more additional user groups that does not include the user as a member. In another example, the application 112 can remove, from the list of user groups that include the user as a member, one or more user groups. The application 112 can both remove user groups that include the user as a member and add user groups that do not include the user as a member.

Budgeting and throttling techniques can also add noise that prevents inferring user data based on selection parameters. For example, a content platform or its code running in the secure distribution system 120 can adjust selection parameters for digital components based on a budget and/or the number of times the digital component has been provided over a given time period.

In some cases, the publisher shares amounts provided to it based on selection parameters with the SSP 140 that manages the digital component selection process on its behalf. The secure distribution system 120 can be configured to adjust the percentage of the selection parameter that is shared (e.g., randomly or pseudorandomly) such that the value of the selection parameter provided to the publisher digital component server 134 varies over time. The techniques for preventing inference of user data based on selection parameters described above can be used alone or in any combination to prevent such inferences.

In stage L, the publisher digital component server 134 selects a digital component for presentation with the content of the publisher. The publisher digital component server 134 can select the digital component from a first set of candidate digital components stored by the publisher digital component server 134 and a second set of candidate digital components that includes the candidate digital component(s) for which digital component data is received from the secure distribution system 120. To identify the first set of candidate digital components, the publisher digital component server 134 can use the contextual data and any other non-encrypted data included in the content request received from the application 112. For example, the publisher digital component server 134 can store digital components and distribution criteria for the stored digital components. If the contextual data and/or other data satisfies the distribution criteria for a digital component, the publisher digital component server 134 can identify the digital component as a candidate digital component and include the candidate digital component in the first set of digital components.

The publisher digital component server 134 can select a digital component from the sets of candidate digital components based on their selection parameters and/or predicted performance. For example, the publisher digital component server 134 can select the digital component that has the highest selection parameter or the highest score where the score for each candidate digital component is based on a combination of the selection parameter and a predicted performance parameter (e.g., likelihood of user interaction or conversion).

In stage M, the publisher digital component server 134 sends the digital component data for the selected digital component to the publisher content server 132. The publisher digital component server 134 can provide the selected digital component to the publisher content server 132 for delivery to the application 112 in different ways depending on whether the selected digital component is one of the candidate digital components in the first set of digital component stored by the publisher digital component server 134 or one of the second candidate digital components for which digital component data is received from the secure distribution system 120.

If the selected digital component is from the first set of candidate digital components, the publisher system 130 has access to the selected digital component and its content and it was selected without using sensitive user data that is not available to the publisher system 130. Thus, the publisher digital component server 134 can provide the digital component in cleartext to the publisher content server 132.

If the selected digital component is from the second set of candidate digital components, the publisher system 130 can send the encrypted digital component data for the selected digital component to the publisher content server 132. As this digital component data is encrypted using an encryption key of the application 112 or client device 110, the publisher system 130 cannot access the digital component or its content.

In stage N, the publisher content server 132 sends the digital component data (e.g., encrypted digital component data or the digital component itself depending on which is received from the publisher digital component server 134) for the selected digital component to the application 112.

In stage O, the application 112 presents the selected digital component. If the selected digital component is from the first set of candidate digital components, the application 112 can receive the selected digital component itself in cleartext from the publisher content server 132. If the selected digital component is from the second set of candidate digital components, the application 112 can receive the encrypted digital component data and decrypt this data using its decryption key corresponding to the encryption key that the secure distribution system 120 used to encrypt the digital component data. As this decrypted data has all of the files and/or data for presenting the digital component, the application 112 can present the digital component without sending any network requests for additional content. This enhances user privacy as the servers that would receive and respond to such requests may be able to correlate multiple requests for such content to identify multiple digital components presented to the user.

In some implementations, the application 112 presents digital components that are received in the form of encrypted digital component data in a restricted frame of a web page or other resource. The restricted frame can restrict communication to and/or from the restricted frame. For example, the restricted frame can control the data that flows into and/or out of the restricted frame. Example restricted frames include fenced frames and iframes. Using a restricted frame prevents code of the publisher's resource or content from sending data about the digital component to the publisher system 130. In addition to presenting the digital component in a restricted frame, the application 112 can be configured to decrypt the encrypted digital component data for the digital component within the restricted frame. The application 112 can present digital components that are received in cleartext form in regular (e.g., unrestricted frames).

The application 112 can also send a report that indicates that the selected digital component has been presented. If the selected digital component is received in cleartext form, the application 112 can send data indicating that the digital component has been presented to the publisher system 130, e.g., to the publisher content server 132. For example, such digital components can include metadata that includes a resource locator (e.g., URL or URI) for the publisher system 130. The application 112 can be configured to identify the resource locator and send the data to the server corresponding to the resource locator.

If the selected digital component is received as encrypted digital component data, the application 112 can send data indicating that the digital component has been presented to the secure distribution system 120 (or an aggregate reporting system) without going through the publisher system 130. For example, such digital components can include metadata that includes a resource locator (e.g., URL or URI) for the secure distribution system 120 or aggregate reporting system. The application 112 can be configured to identify the resource locator and send the data to the server corresponding to the resource locator. The secure distribution system 130 or aggregate reporting system can provide, to the publisher system 130, aggregate reports of presentations of digital components at multiple client devices 110 to prevent the publisher system 130 from being able to correlate particular presentations with particular users.

In some implementations, the publisher system 130 can use the secure distribution system 120 to determine selection parameters for its own digital components based on sensitive user data, e.g., in addition to or in place of requesting candidate digital components from the secure distribution system 120. In this example, the publisher system 130 can send, to the secure distribution system 120, a set of digital components and the set of data received from the application 112 in the content request along with a request to provide a selection parameter for each digital component in the set. This request can also include selection parameter logic (e.g., in the form of a function, code, or set of rules) configured to determine a selection parameter or factor that is applied to (e.g., multiplied by) the selection parameter based on the user data of the set of data in the content request. The selection parameter logic can be for all digital components in the set or each digital component can have its own custom selection parameter logic.

The secure distribution system 120 can decrypt the encrypted user data, as described above, and execute the selection parameter logic using the decrypted user data to determine the selection parameter or factor for each digital component. The secure distribution system 120 can send the selection parameters or factors for the digital components to the publisher digital component server 134. The publisher digital component server 134 can then select a digital component from the set of digital components based on the selection parameters in the same manner as described above. In this example, stages D-G may be excluded.

FIG. 2 is a block diagram of an example environment 200 in which digital components are distributed to client devices in a privacy preserving manner. The example environment 200 can be used to provide video digital components to client device 110. For video digital components, a publisher can perform video stitching, which is sometimes referred to as dynamic ad insertion, to create a sequential playlist whose line items are parameters to retrieve and render video segments. The video segments in the playlist can be organic video content of the publisher or third party digital components. However, this may enable the publisher system 130 to identify which video digital components are displayed to a user.

The example environment 200 includes client devices 110, a publisher system 130, a network 105, and a secure distribution system 120, similar to the example environment 100 of FIG. 1. The environment 200 also includes a secure content delivery network server 170 and an unverified content delivery network server 180. The secure content delivery network server 170 can be operated by a trusted party similar to the secure distribution system 120. The unverified content delivery network server 180 can be operated by any entity. Each content delivery network server can stitch video segments into a playlist that is provided to the application 112. In some implementations, the application 112 or client device 110 performs the stitching process, as described below.

An example process for selecting and providing a digital component for presentation at a client device 110 is illustrated in stages A - I, which illustrate a flow of data between the components of the environment 200.

In stage A, the application 112 sends a request for content of a publisher to a publisher content server 132 of the publisher. In this example, the request is for a video that is published or otherwise distributed by the publisher. Similar to stage A of FIG. 1, the application 112 can send, with the content request, a set of data that includes encrypted user data, contextual data, and/or other appropriate data for use in selecting digital components. The application 112 can encrypt the user data using any of the techniques described herein.

In stage B, publisher content server 132 generates and sends a digital component request to the publisher digital component server 134. The digital component request can include the set of data received from the application 112 and/or other data. For example, the digital component request can include the set of data and/or data indicating the content requested by the application 112.

In stage C, the publisher digital component server 134 generates and sends a digital component request to the secure distribution system 120. This digital component request can include the set of data, a portion of the set of data (e.g., less than all of the set of data, such as the encrypted user data or the contextual data), and/or the other data (e.g., data identifying the requested content).

This digital component request can also include data identifying a set of candidate digital components, e.g., candidate video digital components, and selection parameter logic configured to determine selection parameters or factors to be applied to selection parameters based on the user data, the contextual data, and/or other appropriate data. As described above, each candidate digital component can have custom selection parameter logic or common selection parameter logic can be used for all of the candidate digital components. If the selection logic is for determining factors, the digital component request can include the selection parameter for each candidate digital component so that the secure distribution system 120 can apply the factors to the selection parameters. In some implementations, the selection parameter logic can include one or more trained machine learning models that are trained to determine selection parameters and/or factors based on the user data, contextual data, and/or other appropriate data.

In stage D, the selection engine 122 determines the selection parameters for the candidate digital components using the selection parameter logic, the user data, the contextual data, and/or other appropriate data. The selection engine 122 can decrypt the user data using the decryption key of the secure distribution system 120 that corresponds to the encryption key used by the application 112 to encrypt the user data, or by querying a probabilistic data structure that encodes the user data.

The selection engine 122 can then evaluate the selection parameter logic for each candidate digital component using the decrypted user data, contextual data, and/or other data. For example, the selection parameter logic may indicate that the selection parameter for a particular digital component that has content related to a first topic is to be a particular value if the user of the client device 110 is a member of a particular user group. In another example, the selection parameter logic may indicate that each candidate digital component's selection parameter should be multiplied by a first factor if the user is a member of a first user group and by a second factor if the user is a member of a second user group.

The selection engine 122 can then select a digital component from among the candidate digital components based on the selection parameters. For example, the selection engine 122 can select the digital component having the highest selection parameter or the highest score where the scores are based on a combination of the selection parameter and a predicted performance parameter (e.g., likelihood of user interaction or conversion).

In stage E, the secure distribution system 120 sends digital component data for the selected digital component to the publisher digital component server 134. The digital component data for a selected digital component can include encrypted digital component data that enables the application 112 or a trusted video player of the application 12 or the client device 110 to retrieve the selected digital component from one of the content delivery network servers 170 or 180. This data can include a resource locator for the content delivery network server 170 or 180 and/or data identifying the selected digital component. The secure distribution system 120 can generate the encrypted digital component data by encrypting the data using an encryption key (e.g., public key) of the application 112 or the client device 110.

The digital component data for the selected digital component can also include cleartext data that enables the publisher digital component server 134 to perform a digital component selection process to select a digital component for presentation at the client device 110 and data that enables the publisher system 130 or another system or server to construct a playlist that includes the digital component. The publisher digital component server 134 can select from a set of candidate digital components that includes the digital component selected by the secure distribution system 120 and candidate digital components stored by the publisher digital component server 134. The cleartext data can include the selection parameter for the selected digital component and a duration (e.g., video runtime) of the digital component.

In some implementations, the cleartext data also includes a surrogate identifier for the selected digital component. This surrogate identifier can be used to troubleshoot issues with playback of the selected digital component at the client device 110 without identifying the actual digital component. In some implementations, the secure distribution system 120 generates the surrogate identifier by encrypting a unique identifier that identifies the selected digital component using an encryption key and an encryption technique that guarantees semantic security, such as Elliptical Curve Digital Signature Algorithm (ECDSA).

In stage F, the publisher digital component server 134 selects a video digital component from the set of candidate digital components. The publisher digital component server 134 can select the video digital component based on the selection parameters and/or scores for the candidate digital components.

In stage G, the publisher digital component server 134 sends digital component data for the selected digital component to the publisher content server 132. If the selected digital component is a candidate digital component stored by the publisher digital component server 134, this digital component data can include cleartext data identifying the digital component, a resource locator for downloading the digital component, and/or the duration of the digital component. This enables the publisher content server 132 to generate a playlist, as described below.

If the selected digital component is the digital component selected by the secure distribution system 120, the digital component data can include the encrypted digital component data received from the secure distribution system 120 and the duration. This enables the publisher content server 132 to generate the playlist, but does not enable the publisher content server 132 to identify the digital component that is being included in the playlist.

In stage H, the publisher content server 132 generates a playlist that includes video segments. The video segments can include one or more publisher video segments (e.g., organic video content of the publisher) and the selected video digital component. The playlist can specify an order in which the video segments are to be played and the duration of each video segment.

In stage I, the publisher content server 132 provides a response to the content request to the application 112. This response can include the playlist generated by the publisher content server 132.

The video segments of the playlist are then stitched together for presentation by the application 112. There are multiple ways that the stitching can be performed in one of stages J₁ - J₃.

In stage J₁, the unverified content delivery network server 180 stitches the video segments of the playlist. In this example, the application 112 provides the playlist to the unverified content delivery network server 180. The unverified content delivery network server 180 can store video content of the publisher (or for multiple publishers) and/or video digital components. To stitch the video segments, the unverified content delivery network server 180 can access, from its local storage, the video segments for the video content of the publisher and any video digital components for which the digital component data included in the playlist is not encrypted. To prevent the unverified content delivery network server 180 from inferring sensitive user data from video digital components selected by the secure distribution system 120 based on user data, the unverified content delivery network server 180 can request encrypted versions of these digital components from the secure content delivery network server 170. For example, the playlist can include the encrypted digital component data for any digital component for which encrypted digital component data is received from the secure distribution system 120 for inclusion in the selection process and the digital component is selected by the publisher digital component server 134 for display to the user. The unverified content delivery network server 180 can access this encrypted digital component data and provide the encrypted digital component data to the secure content delivery network server 170. The secure content delivery network server 170 can decrypt the digital component data using a decryption key corresponding to the encryption key used by the secure distribution system 120 to encrypt the digital component data to identify the digital component that is being requested. The secure content delivery network server 170 can send an encrypted version of the digital component to the unverified content network server 180.

In some implementations, Digital Rights Management (DRM) techniques are used to encrypt video digital components and to ensure that only the OS 111 of the client device 110 can decrypt the encrypted video digital components. Using DRM techniques also prevents publishers from capturing screenshots of the content being displayed by the client device 110, thereby further enhancing user privacy by preventing the publisher from being able to identify video digital components displayed to users in the publisher's playlists.

In some implementations, the secure content delivery network server 170 is configured to encrypt the video digital components using an encryption key of the application 112 or client device 110. In this example, the application 112 can decrypt the video digital component using a decryption key corresponding to the encryption key.

The unverified content delivery network server 180 receives the encrypted video digital component and stitches the video digital component with the other video segments of the playlist that may not be encrypted. The unverified content delivery network server 180 can then send the video segments to the application 112.

In stage J₂, the secure content delivery network server 170 stitches the video segments of the playlist. In this example, the application 112 provides the playlist to the secure content delivery network server 170. The secure content delivery network server 170 can request video content of the publisher and digital components for which the digital component data is not encrypted in the playlist from the unverified content delivery network server 180. The secure content delivery network server 170 can access digital components for which the digital component data is encrypted from its local storage, e.g., by decrypting the encrypted digital component data and identifying the video digital component in its local storage.

If the videos are to be played by a web browser application 112, the application 112 can communicate directly with the secure content delivery network server 170 to provide the playlist and obtain the video segments, e.g., without any additional encryption beyond Hypertext Transfer Protocol Secure (HTTPS) and/or Transport Layer Security (TLS).

For native applications 112, a trusted video player of the client device 110 can communicate with the secure content delivery network server 170 via an untrusted application 112 hosting the trusted video player. To prevent the application 112 from inferring digital components selected by the secure distribution system 120 and included in the playlist, the secure content delivery network server 170 can encrypt the video digital components using an encryption key of the application 112 or client device 110, or using DRM techniques.

The secure content delivery network server 170 can stitch the video segments and provide the video segments to the application 112 or the trusted video player of the application 112.

In stage J₃, the client device 110 stitches the video segments of the playlist. In this example, the client device 110 can obtain video content of the publisher and digital components for which the digital component data is not encrypted in the playlist from the unverified content delivery network server 180. The client device 110 can request digital components for which the digital component data is encrypted from the secure content delivery network server 170. The secure content delivery network server 170 can provide encrypted versions of these digital components to the client device 110. The client device 110 can then stitch the video segments received from the content delivery network servers 170 and 180.

In stage K, the application 112 plays the video segments for the user. For any encrypted video digital components, the application 112 can decrypt the video digital components using a decryption key if the video digital component is encrypted using an encryption key. If DRM techniques are used, the application 112 can provide the encrypted video digital component to the OS 111. The OS 111 can obtain a license for the digital component, decrypt the digital component using the license, and play the video of the digital component. The OS 11 can also prevent any screen captures at the client device 110 while the video is playing using DRM techniques.

As noted above, a surrogate identifier can be used for debugging errors in paying videos. The secure distribution system 120 can generate, as the surrogate identifier for a video digital component, a hash value of the identifier for the video digital component and provide that with the digital component data for the video digital component. The secure distribution system 120 can also maintain a mapping of the surrogate identifiers and the video digital components so that the secure distribution system 120 can determine video digital component that corresponds to a surrogate identifier received in a debugging request, e.g., if a user reports a problem with the video. In this way, only the secure distribution system 120 determines which video digital component corresponds to a surrogate identifier. The secure distribution system 120 can generate new surrogate identifiers for digital components periodically, e.g., each day, week, month, or other appropriate time period.

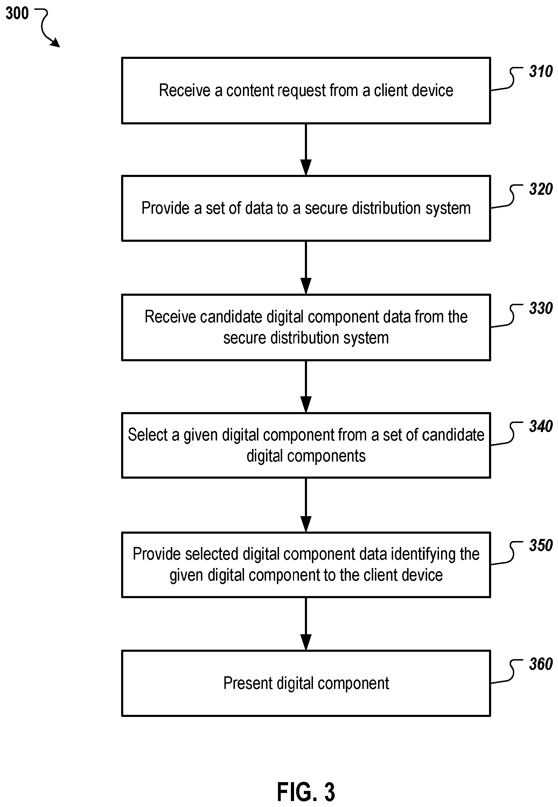

FIG. 3 is a flow diagram of an example process for selecting and providing a digital component for display at a client device in a privacy preserving manner. Operations of the process 300 can be performed by a publisher system, e.g., the publisher system 130 of FIG. 1 or FIG. 2. Operations of the process 300 can also be implemented as instructions stored on one or more computer readable media, which may be non-transitory, and execution of the instructions by one or more data processing apparatus can cause the one or more data processing apparatus to perform the operations of the process 300.

A content request is received from a client device 110 (310). For example, an application 112 running on the client device 110 can send, to a publisher system 130, a request for a web page, application content, a video, and/or other appropriate type of content. As described above, the content request can include a set of data that includes encrypted user data, contextual data, and/or other appropriate data that can be used to select a digital component for presentation to the user. The encrypted user data can be encrypted using an encryption key (e.g., public key) of a secure distribution system 120 to prevent the publisher system 130 from accessing the user data in cleartext.

The set of data is provided to a secure distribution system 120 (320). The secure distribution system 120 is configured to decrypt the encrypted user data to obtain cleartext user data and select candidate digital components based on the user data. The secure distribution system 120 can also be configured to generate selection parameters for the candidate digital components based on the user data, contextual data, and/or selection parameter logic, as described above.

Digital component data for each of one or more candidate digital components is received (330). The candidate digital component data for each candidate digital component can include a selection parameter for use in a digital component selection process and encrypted digital component data that identifies the candidate digital component. The encrypted digital component data can be encrypted using an encryption key of the application 112 or client device, or of a secure content delivery network 170 if the digital components are video digital components. The secure distribution system 120 can select the candidate digital components based on the user data, contextual data, selection parameters for the candidate digital components, scores for the digital components, and/or other appropriate data, as described above.

A given digital component is selected from a set of candidate digital components (340). The set of candidate digital components can include the one or more candidate digital components for which digital component data is received from the secure distribution system and candidate digital components of the publisher (e.g., candidate digital components stored by the publisher system 130). As described above, the publisher system 130 can select a given digital component based on selection parameters for the candidate digital components and/or a score for each candidate digital component.

Selected digital component data for the given digital component is provided to the client device 110 (350). The selected digital component data can identify the given digital component. If the given digital component is one that is stored by the publisher system 130 the selected digital component data can be in cleartext. If the given digital component is one provided by the secure distribution system 120, the selected digital component data can include encrypted digital component data received from the secure distribution system 120.

The given digital component is presented (360). The application 112 can present the given digital component upon receiving the digital component data for the given digital component. If the digital component data is encrypted, the application 112 can decrypt the digital component data to access the given digital component and present it.

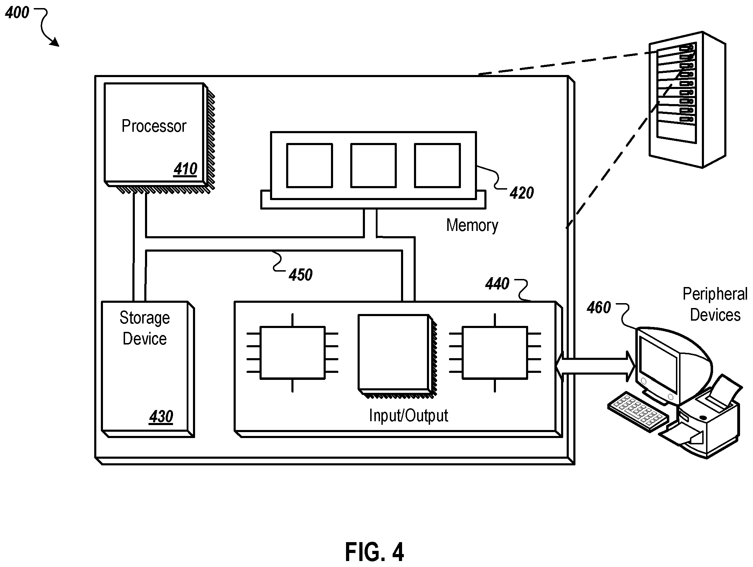

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other devices, e.g., keyboard, printer, display, and other peripheral devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage media (or medium) for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method (300) comprising:
receiving (310), by a publisher server (130) of a publisher and for a client device (110) of a user, a content request that requests content of the publisher for presentation to the user, the content request comprising a set of data that includes encrypted user data;
providing (320), by the publisher server, the set of data to a secure digital distribution system (120) to cause the secure digital distribution system to (i) decrypt the encrypted user data to obtain cleartext user data and (ii) select candidate digital components based on the user data;
receiving (330), by the publisher server and from the secure distribution system, candidate digital component data for each of one or more of the selected candidate digital components, wherein the candidate digital component data for each selected candidate digital component comprises (i) a selection parameter for use in a digital component selection process and (ii) encrypted digital component data that identifies said candidate digital component, wherein the encrypted digital component data for each selected candidate digital component comprises cleartext digital component data that is encrypted using a public encryption key and the publisher server is unable to decrypt said encrypted digital component data;
selecting (340), by the publisher server, a given digital component for presentation to the user from a set of candidate digital components comprising (i) the one or more selected candidate digital components for which digital component data is received from the secure distribution system and (ii) candidate digital components stored by the publisher server; and
providing (350), to the client device, digital component data of the selected digital component data identifying the given digital component.

2. The computer-implemented method of claim 1, wherein:
whenever the given digital component is a candidate digital component of the one or more selected candidate digital components for which digital component data is received from the secure distribution system, the selected digital component data comprises the encrypted digital component data that identifies the candidate digital component; and
whenever the given digital component is a candidate digital component of the candidate digital components of the publisher, the selected digital component data comprises the given digital component or a reference to a network location from which the given digital component is stored for downloading to client devices.

3. The computer-implemented method of any one of claims 1 or 2, wherein the cleartext digital component data comprises the digital component.

4. The computer-implemented method of any one of claims 1 to 3, wherein the cleartext digital component data comprises a web bundle that includes one or more resources for displaying the digital component.

5. The computer-implemented method of any one of claims 1 to 3, wherein the cleartext digital component data comprises data identifying, as the given digital component, a video digital component.

6. The computer-implemented method of claim 5, wherein providing the selected digital component data identifying the given digital component comprises providing the selected digital component data to an application (112) configured to request a playlist comprising the video digital component and video content of the publisher from one or more content delivery networks.

7. The computer-implemented method of claim 6, wherein the application is configured to request the playlist from a secure content delivery network (170) that is configured to obtain the video content of the publisher from an unverified content delivery network (180) and to generate the playlist by stitching the video digital component with the video content of the publisher.

8. The computer-implemented method of claim 6, wherein the application is configured to request the playlist from an unverified content delivery network (180) that is configured to obtain the video digital component from a secure content delivery network (170) and to generate the playlist by stitching the video digital component with the video content of the publisher.

9. The computer-implemented method of any one of claims 5 to 8, wherein the video digital component is encrypted using a digital rights management technique and an operating system (111) of the client device is configured to decrypt the video digital component for display to the user.

10. The computer-implemented method of any preceding claim, wherein the set of data comprises contextual data describing an environment in which the one or more digital components will be presented.

11. A system (400) comprising:
one or more processors (410); and
one or more storage devices (430) storing instructions that, when executed by the one or more processors, cause the one or more processors to carry out the computer-implemented method of any preceding claim.

12. A computer readable medium (420) carrying instructions that, when executed by one or more processors, cause the one or more processors to carry out the computer-implemented method of any one of claims 1 to 10.

13. A computer program product comprising instructions which, when executed by a computer, cause the computer to carry out the computer-implemented method of any of claims 1 to 10.

## Patentansprüche

1. Computerimplementiertes Verfahren (300), umfassend:
Empfangen (310), durch einen Herausgeber-Server (130) eines Herausgebers und für eine Client-Vorrichtung (110) eines Benutzers, einer Inhaltsanforderung, die Inhalt des Herausgebers zur Präsentation für den Benutzer anfordert, wobei die Inhaltsanforderung einen Datensatz umfasst, der verschlüsselte Benutzerdaten beinhaltet;
Bereitstellen (320), durch den Herausgeber-Server, des Datensatzes an ein sicheres digitales Verteilungssystem (120), um zu bewirken, dass das sichere digitale Verteilungssystem (i) die verschlüsselten Benutzerdaten entschlüsselt, um Klartext-Benutzerdaten zu erlangen, und (ii) Kandidaten-Digitalkomponenten basierend auf den Benutzerdaten auswählt;
Empfangen (330), durch den Herausgeber-Server und von dem sicheren Verteilungssystem, von Kandidaten-Digitalkomponentendaten für jede von einer oder mehreren der ausgewählten Kandidaten-Digitalkomponenten, wobei die Kandidaten-Digitalkomponentendaten für jede ausgewählte Kandidaten-Digitalkomponente (i) einen Auswahlparameter zur Verwendung in einem Digitalkomponenten-Auswahlprozess und (ii) verschlüsselte Digitalkomponentendaten, die die besagte Kandidaten-Digitalkomponente identifizieren, umfassen, wobei die verschlüsselten Digitalkomponentendaten für jede ausgewählte Kandidaten-Digitalkomponente Klartext-Digitalkomponentendaten umfassen, die unter Verwendung eines öffentlichen Verschlüsselungsschlüssels verschlüsselt sind, und der Herausgeber-Server nicht in der Lage ist, die besagten verschlüsselten Digitalkomponentendaten zu entschlüsseln;
Auswählen (340), durch den Herausgeber-Server, einer gegebenen Digitalkomponente zur Präsentation für den Benutzer aus einem Satz von Kandidaten-Digitalkomponenten, der (i) die eine oder die mehreren ausgewählten Kandidaten-Digitalkomponenten, für die Digitalkomponentendaten von dem sicheren Verteilungssystem empfangen werden, und (ii) durch den Herausgeber-Server gespeicherte Kandidaten-Digitalkomponenten umfasst; und
Bereitstellen (350), an die Client-Vorrichtung, von Digitalkomponentendaten der ausgewählten Digitalkomponentendaten, welche die gegebene Digitalkomponente identifizieren.

2. Computerimplementiertes Verfahren nach Anspruch 1, wobei:
wann immer die gegebene Digitalkomponente eine Kandidaten-Digitalkomponente der einen oder mehreren ausgewählten Kandidaten-Digitalkomponenten ist, für die Digitalkomponentendaten von dem sicheren Verteilungssystem empfangen werden, die ausgewählten Digitalkomponentendaten die verschlüsselten Digitalkomponentendaten umfassen, welche die Kandidaten-Digitalkomponente identifizieren; und
wann immer die gegebene Digitalkomponente eine Kandidaten-Digitalkomponente der Kandidaten-Digitalkomponenten des Herausgebers ist, die ausgewählten Digitalkomponentendaten die gegebene Digitalkomponente oder einen Verweis auf einen Netzwerkspeicherort umfassen, an dem die gegebene Digitalkomponente zum Herunterladen auf Client-Vorrichtungen gespeichert ist.

3. Computerimplementiertes Verfahren nach einem der Ansprüche 1 oder 2, wobei die Klartext-Digitalkomponentendaten die Digitalkomponente umfassen.

4. Computerimplementiertes Verfahren nach einem der Ansprüche 1 bis 3, wobei die Klartext-Digitalkomponentendaten ein Web-Bundle umfassen, das eine oder mehrere Ressourcen zum Anzeigen der Digitalkomponente beinhaltet.

5. Computerimplementiertes Verfahren nach einem der Ansprüche 1 bis 3, wobei die Klartext-Digitalkomponentendaten Daten umfassen, die als die gegebene Digitalkomponente eine Video-Digitalkomponente identifizieren.

6. Computerimplementiertes Verfahren nach Anspruch 5, wobei das Bereitstellen der ausgewählten Digitalkomponentendaten, welche die gegebene Digitalkomponente identifizieren, das Bereitstellen der ausgewählten Digitalkomponentendaten an eine Anwendung (112) umfasst, die dazu konfiguriert ist, eine Wiedergabeliste, welche die Video-Digitalkomponente und Videoinhalte des Herausgebers umfasst, von einem oder mehreren Inhaltsbereitstellungsnetzwerken anzufordern.

7. Computerimplementiertes Verfahren nach Anspruch 6, wobei die Anwendung dazu konfiguriert ist, die Wiedergabeliste von einem sicheren Inhaltsbereitstellungsnetzwerk (170) anzufordern, das dazu konfiguriert ist, die Videoinhalte des Herausgebers von einem nicht verifizierten Inhaltsbereitstellungsnetzwerk (180) zu erlangen und die Wiedergabeliste durch Zusammenfügen der Video-Digitalkomponente mit den Videoinhalten des Herausgebers zu erzeugen.

8. Computerimplementiertes Verfahren nach Anspruch 6, wobei die Anwendung dazu konfiguriert ist, die Wiedergabeliste von einem nicht verifizierten Inhaltsbereitstellungsnetzwerk (180) anzufordern, das dazu konfiguriert ist, die Video-Digitalkomponente von einem sicheren Inhaltsbereitstellungsnetzwerk (170) zu erlangen und die Wiedergabeliste durch Zusammenfügen der Video-Digitalkomponente mit den Videoinhalten des Herausgebers zu erzeugen.

9. Computerimplementiertes Verfahren nach einem der Ansprüche 5 bis 8, wobei die Video-Digitalkomponente unter Verwendung einer Technik zur digitalen Rechteverwaltung verschlüsselt ist und ein Betriebssystem (111) der Client-Vorrichtung dazu konfiguriert ist, die Video-Digitalkomponente zur Anzeige für den Benutzer zu entschlüsseln.

10. Computerimplementiertes Verfahren nach einem der vorhergehenden Ansprüche, wobei der Datensatz kontextuelle Daten umfasst, die eine Umgebung beschreiben, in der die eine oder die mehreren Digitalkomponenten präsentiert werden.

11. System (400), umfassend:
einen oder mehrere Prozessoren (410); und
eine oder mehrere Speichervorrichtungen (430), die Anweisungen speichern, die bei Ausführung durch den einen oder die mehreren Prozessoren bewirken, dass der eine oder die mehreren Prozessoren das computerimplementierte Verfahren nach einem der vorhergehenden Ansprüche ausführen.

12. Computerlesbares Medium (420), das Anweisungen trägt, die bei Ausführung durch einen oder mehrere Prozessoren bewirken, dass der eine oder die mehreren Prozessoren das computerimplementierte Verfahren nach einem der Ansprüche 1 bis 10 ausführen.

13. Computerprogrammprodukt, umfassend Anweisungen, die bei Ausführung durch einen Computer bewirken, dass der Computer das computerimplementierte Verfahren nach einem der Ansprüche 1 bis 10 ausführt.

## Revendications

1. Procédé mis en œuvre par ordinateur (300) comprenant :
la réception (310), par un serveur d'éditeur (130) d'un éditeur et pour un dispositif client (110) d'un utilisateur, d'une requête de contenu qui demande du contenu de l'éditeur pour présentation à l'utilisateur, la requête de contenu comprenant un ensemble de données qui comporte des données utilisateur chiffrées ;
la fourniture (320), par le serveur d'éditeur, de l'ensemble de données à un système de distribution numérique sécurisé (120) pour amener le système de distribution numérique sécurisé à (i) déchiffrer les données utilisateur chiffrées pour obtenir des données en clair utilisateur et (ii) sélectionner des composants numériques candidats sur la base des données utilisateur ;
la réception (330), par le serveur d'éditeur et à partir du système de distribution sécurisé, de données de composant numérique candidat pour chacun d'un ou de plusieurs des composants numériques candidats sélectionnés, dans lequel les données de composant numérique candidat pour chaque composant numérique candidat sélectionné comprennent (i) un paramètre de sélection à utiliser dans un processus de sélection de composant numérique et (ii) des données chiffrées de composant numérique qui identifient ledit composant numérique candidat, dans lequel les données chiffrées de composant numérique pour chaque composant numérique candidat sélectionné comprennent des données en clair de composant numérique qui sont chiffrées à l'aide d'une clé de chiffrement publique et le serveur d'éditeur est incapable de déchiffrer lesdites données chiffrées de composant numérique ;
la sélection (340), par le serveur d'éditeur, d'un composant numérique donné à présenter à l'utilisateur parmi un ensemble de composants numériques candidats comprenant (i) les un ou plusieurs composants numériques candidats sélectionnés pour lesquels des données de composant numérique sont reçues du système de distribution sécurisé et (ii) des composants numériques candidats stockés par le serveur d'éditeur ; et
la fourniture (350), au dispositif client, de données de composant numérique des données de composant numérique sélectionné identifiant le composant numérique donné.

2. Procédé mis en œuvre par ordinateur selon la revendication 1, dans lequel :
lorsque le composant numérique donné est un composant numérique candidat des un ou plusieurs composants numériques candidats sélectionnés pour lesquels des données de composant numérique sont reçues du système de distribution sécurisé, les données de composant numérique sélectionné comprennent les données chiffrées de composant numérique qui identifient le composant numérique candidat ; et
lorsque le composant numérique donné est un composant numérique candidat des composants numériques candidats de l'éditeur, les données de composant numérique sélectionné comprennent le composant numérique donné ou une référence à un emplacement réseau à partir duquel le composant numérique donné est stocké pour être téléchargé sur des dispositifs clients.

3. Procédé mis en œuvre par ordinateur selon l'une quelconque des revendications 1 ou 2, dans lequel les données en clair de composant numérique comprennent le composant numérique.

4. Procédé mis en œuvre par ordinateur selon l'une quelconque des revendications 1 à 3, dans lequel les données en clair de composant numérique comprennent un ensemble Web qui comporte une ou plusieurs ressources pour l'affichage du composant numérique.

5. Procédé mis en œuvre par ordinateur selon l'une quelconque des revendications 1 à 3, dans lequel les données en clair de composant numérique comprennent des données identifiant, comme composant numérique donné, un composant numérique vidéo.

6. Procédé mis en œuvre par ordinateur selon la revendication 5, dans lequel la fourniture des données de composant numérique sélectionné identifiant le composant numérique donné comprend la fourniture des données de composant numérique sélectionné à une application (112) configurée pour demander une liste de lecture comprenant le composant numérique vidéo et le contenu vidéo de l'éditeur à partir d'un ou de plusieurs réseaux de distribution de contenu.

7. Procédé mis en œuvre par ordinateur selon la revendication 6, dans lequel l'application est configurée pour demander la liste de lecture à partir d'un réseau de distribution de contenu sécurisé (170) qui est configuré pour obtenir le contenu vidéo de l'éditeur à partir d'un réseau de distribution de contenu non vérifié (180) et pour générer la liste de lecture en assemblant le composant numérique vidéo avec le contenu vidéo de l'éditeur.

8. Procédé mis en œuvre par ordinateur selon la revendication 6, dans lequel l'application est configurée pour demander la liste de lecture à partir d'un réseau de distribution de contenu non vérifié (180) qui est configuré pour obtenir le composant numérique vidéo à partir d'un réseau de distribution de contenu sécurisé (170) et pour générer la liste de lecture en assemblant le composant numérique vidéo avec le contenu vidéo de l'éditeur.

9. Procédé mis en œuvre par ordinateur selon l'une quelconque des revendications 5 à 8, dans lequel le composant numérique vidéo est chiffré à l'aide d'une technique de gestion des droits numériques et un système d'exploitation (111) du dispositif client est configuré pour déchiffrer le composant numérique vidéo en vue de son affichage à l'utilisateur.

10. Procédé mis en œuvre par ordinateur selon une quelconque revendication précédente, dans lequel l'ensemble de données comprend des données contextuelles décrivant un environnement dans lequel les un ou plusieurs composants numériques seront présentés.

11. Système (400) comprenant :
un ou plusieurs processeurs (410) ; et
un ou plusieurs dispositifs de stockage (430) stockant des instructions qui, lorsqu'elles sont exécutées par les un ou plusieurs processeurs, amènent les un ou plusieurs processeurs à exécuter le procédé mis en œuvre par ordinateur selon une quelconque revendication précédente.

12. Support lisible par ordinateur (420) transportant des instructions qui, lorsqu'elles sont exécutées par un ou plusieurs processeurs, amènent les un ou plusieurs processeurs à exécuter le procédé mis en œuvre par ordinateur selon l'une quelconque des revendications 1 à 10.

13. Produit de programme informatique comprenant des instructions qui, lorsqu'elles sont exécutées par un ordinateur, amènent l'ordinateur à exécuter le procédé mis en œuvre par ordinateur selon l'une quelconque des revendications 1 à 10.
